# EUROPEAN PATENT SPECIFICATION

(11) **EP 2 353 910 B1**
(45) Date of publication and mention of the grant of the patent: **26.09.2012**
(21) Application number: 10151970.0
(22) Date of filing: 28.01.2010
(51) Int. Cl.: B60K 1/04, B66F 9/06, B66F 9/24, B66F 9/075, B60R 16/04, B60S 5/06

(54) **Industrial vehicle comprising a battery locking system**
Industriefahrzeug mit einem Batterieverriegelungssystem
Véhicule industriel comprenant un système de verrouillage de la batterie

(43) Date of publication of application: 10.08.2011
(73) Proprietor: Atlet AB, 43582 Mölnlycke (SE)
(72) Inventor: Nielsen, Torben, 511 92 Örby (SE); Johansson, Daniel, 435 42 Mölnlycke (SE)
(74) Representative: Lind, Urban Arvid Oskar

(56) References cited:
- EP-A2- 2 011 761
- DE-A1-102007 014 967
- US-A1- 2008 314 662

## Description

### Technical Field

The present invention relates to an industrial vehicle comprising a battery locking system. The present invention also relates to a method for replacing a battery pack using such a battery locking system.

### Background of the Invention

In electrical industrial vehicles, such as fork-lift trucks, that are powered by a battery, the battery pack must be secured in a manner ensuring that it does not escape from its place on the vehicle, and so that it is relatively free from play, during operation of the vehicle. The battery need to be recharged regularly. In many occasions, the battery can be recharged while on-board the vehicle. However, many vehicles of this type are used on consecutive shifts, such as on two or three shifts a day, or being used at all times around the clock. For such vehicles, being used for long consecutive hours, it is necessary to replace the battery pack with a new, charged battery pack, and perform the charging off-board. For this type of use, it is of great importance that the switching of battery packs can be made as fast and easy as possible, in order to reduce the time when the vehicle is inactive.

In many vehicles the battery pack is installed to be receptacled from above, which renders both installation and removal of the battery pack cumbersome and tedious.

In other solutions the battery pack is installed from the side of a truck by means of for example sliding or rolls, which simplifies the installation and removal of the battery pack. However, also with these known types of arrangements, a secure battery locking system is important for the battery pack not to escape sidewards during operation, and to be securely blocked without play, which is difficult to achieve in practice, and still allowing a swift and easy battery pack switch procedure.

In US2008/0314662 a locking mechanism for securing a battery pack is described that blocks the battery pack that is inserted in a receptacle from escaping in a lateral direction. Although providing a more secure locking mechanism compared to prior art it comprises relatively many parts and is therefore relatively complicated both to manufacture and operate. The locking mechanism moreover secures the battery pack in only one direction, why the problem with undesired play during operation may occur.

Therefore, there is a need for an improved battery locking system that securely locks the battery pack, with a relatively simple operation.

An industrial vehicle with a battery locking system showing the features of the preamble of claim 1 is known from DE 10 2007 014 967 A1.

### Summary of the Invention

In view of the above, a general object of the present invention is to provide an industrial vehicle with an improved battery locking system, and a corresponding method for replacing battery packs. This and other objects are achieved through a battery locking system according to the appended claims.

According to a first aspect of the present invention there is provided an industrial vehicle comprising a battery locking system, which comprises: a compartment for receiving a battery pack comprising at least one supporting wall and at least one opening in the compartment for installation or removal of the battery; a fixed holder arranged in vicinity of the at least one opening; and a locking mechanism comprising, in an upper part, an angled locking surface, facing the compartment, adapted to block the battery pack in two directions, and, in a lower part, adapted to be connected to the fixed holder, the locking mechanism being axially displaceable in relation to the fixed holder, and, in an inserted position, being at least partly rotatable. Further, one of the fixed holder and the locking mechanism comprises a socket and the other comprises a corresponding stub shaft to be inserted to the socket, wherein a first guide channel is arranged in one of the socket and the stub shaft; and a first protrusion is arranged on the other of the stub shaft and the socket, the protrusion being adapted to cooperate with the first guide channel so as to guide the axial displacement between the socket and the stub shaft between the inserted position and an extended position of the stub shaft in relation to the socket.

The fixed holder may hence comprise the socket or the stub shaft, whereas the locking mechanism comprises the other of the socket or the stub shaft. Further, the guide channel may be arranged in either the socket or the stub shaft.

Preferably, the fixed holder comprises the socket and the locking mechanism comprises the stub shaft. Further, the guide channel is preferably arranged in the socket. The following description will relate primarily to this preferred embodiment, but it would be appreciated by any one versed in the art that the function of these parts would be essentially the same also in the other arrangements.

By supporting wall may mean a wall with any height, such as an entire wall adapted to support an entire battery wall or a lower wall for partly supporting a battery wall. For example, the supporting wall may be a rim or flange of low height, supporting only the lower part of the battery pack. The compartment may comprise, one, two or more supporting walls. For example, he compartment may comprise two supporting walls, whereby the supporting walls may be arranged parallel to each other, and wherein two openings are formed between the supporting walls. However, in a compartment having only one opening, the compartment may comprise three walls, or only one wall, extending in different directions. Further, since the locking mechanism locks the battery in two directions, there is in fact only need for one supporting wall, along one side of the compartment, regardless of whether the compartment is provided with one or two openings. In the situation where only one supporting wall is used, the locking mechanism is preferably arranged opposite to the supporting wall.

By protrusion is here intended any protrusion having a form which may cooperate with the guide channel. For example, the protrusion may be in the form of a pin or a peg.

By inserted position should be understood that the stub shaft is inserted into the socket, as far as possible, limited by the lowest level of the first guide channel, in which position the battery pack may be locked in place.

By extended position should be understood that the stub shaft is axially displaced to a position where the battery pack can be unblocked.

By angled locking surface is here intended a surface that is angled to be able to block the battery pack from moving in the two directions corresponding to the two sides of the angled locking surface. The angled locking surface may for example be formed by an angled plate. However, an angled surface may also be provided by parts having other forms than plates, , such as having a semi-circular or square form. The surfaces of the angled surface may form an angle of about 90 degrees. However, a slightly larger or smaller angle is also feasible.

The present invention is based on the understanding that an axial movement between the stub shaft and the socket may be guided by a guide channel and a protrusion arranged in these parts cooperating. As a result, only a few components are needed to provide a battery locking system that allows for a simple operation to axially displace the stub shaft and the socket in relation to each other between an inserted position and an extended position. Since only a few components are needed, less material is required for producing the system and the system moreover becomes relatively simple to produce. Further, the battery replacement procedure becomes very simple and swift by means of the presently proposed battery locking system.

Moreover, the inventors have realized that by combining an angled locking surface with the additional components of the battery locking system of the present invention the battery pack may be securely blocked in the compartment from two directions, without play and with simple operation.

Furthermore, the guide channel may be closed, allowing axial displacement of the fixed holder in relation to the locking mechanism only between the inserted and the extended position. This results in that the relative axial movement between the stub shaft and the socket may be limited to these positions. Further, the locking mechanism may be tiltable away from the opening in the extended position. Tilting of the stub shaft may hence be possible when extended to a certain level, which may be advantageous since the angled plate arranged on the stub shaft may be tilted in a direction away from the battery pack compartment. In the extended position the battery pack may hence be unblocked and removed, without the stub shaft being removed from the battery locking system. This results in that there is no part of the battery locking system that must be removed when manipulating the system, whereby no parts can get lost.

Further, the channel may be widened at a position corresponding to the inserted position, whereby there may be room for rotation of the stub shaft in the socket. The level of rotation depends on the size of the widened area. The stub shaft may hence rotate to a certain level when the angled locking surface is not blocking the battery pack.

Moreover, the widened area may be inclined so as to allow rotation due to gravitation of the locking mechanism in the fixed holder in the inserted position. The rotation of the stub shaft being affected by the gravitation may be advantageous when the stub shaft is in the inserted position and there is no battery in the compartment, since the rotation angles the angled locking surface to allow enough space for a battery pack to be inserted. Thus, when the locking mechanism is not tightened and locked, it will, due to gravity, take a slightly opened rest position, which makes the replacement procedure even easier. This feature is especially advantageous when there are more than one locking mechanism since only one of the locking mechanisms must then be operated to unblock the battery, whereas the other may automatically unblock the battery, and will remain in a slightly opened position during insertion of the new battery pack.

Moreover, the surface finish of the inclined widened area may advantageously be selected so as to promote sliding of the protrusion.

Preferably, the widened area is inclined with an angle selected to provide adequate sliding. This selection depends on the friction between the sliding part and the surface finish, and the mass of the moving part, and is preferably optimized based on these parameters. However, generally, the widened area is inclined with an angle in the range between 10 and 50 degrees, and preferably in the range 15-35 degrees, and most preferably in the range 20-30 degrees. For example, the angle may be around 25 degrees. Hereby, the inclined surface ensures a sufficient level of rotation of the stub shaft.

Moreover a second guide channel may be arranged opposite the first guide channel in one of the socket and the stub shaft, and a second protrusion may be arranged opposite the first protrusion in the other of the socket and the stub shaft. The second protrusion may be an extension of the first protrusion through the stub shaft, or a separate protrusion arranged opposite the first protrusion. By providing a second guide channel and protrusion the axial movement between the stub shaft and the socket may be supported from two directions, which makes the locking system more robust and easier to operate.

Moreover, the battery locking system may comprise a lock tightening means arranged to operate the angled locking surface to block or unblock the battery pack. By lock tightening means is meant any means that can be tightened and loosened, e.g. by means of for example rotation or by spring force. For example, the lock tightening means may comprise a bolt being operable through a threaded opening in the locking mechanism, wherein the inner surface of the bolt is directly or indirectly in contact with the battery pack. Since the locking mechanism is at least partly rotatable in relation to the fixed holder and the battery pack, the lock tightening means may hence be an effective means for securing the angled locking surface to two surfaces of the battery pack to block it. The lock tightening means may moreover be used as a handle to perform displacement of the stub shaft in relation to the socket, and to tilt the stub shaft.

Furthermore, the angled locking surface may comprise an inwardly extending shoulder, for blocking the battery pack more securely and avoid play. This shoulder may form a safety measure, e.g. avoiding that the locking mechanism becomes entirely unlocked, and hindering the battery pack from leaving the compartment, even if e.g. the lock tightening means are not operated properly, or if this part of the procedure is accidentally forgotten.

Further, the industrial vehicle preferably comprises two oppositely arranged openings and two oppositely arranged sockets and locking mechanisms, in the vicinity of each of the oppositely arranged openings. By using two locking mechanisms the battery pack may be inserted or removed in either of the two directions. Moreover, the preferred feature of the above-discussed inclined widened portion of the first channel results, as mentioned, in the additional effect that only one of the angled locking surface must be unsecured manually to remove a battery pack from the compartment, since the other angled locking surface may be partly opened automatically. In more detail, for example the first angular locking surface may be manually removed from blocking the battery pack to be able to remove the battery pack through the first opening, whereas the second angular locking surface may remain blocking the battery pack. However, when the forces between the second angular locking surface and the battery pack decreases due to that the first angular locking surface is unsecured, and further due to that the battery pack is removed the stub shaft of the second locking mechanism may rotate in the socket due to gravitation until the protrusion of the stub shaft reaches the lowest level in the inclining part of the channel, such that the angled plate rotates accordingly into a partly opened position.

An additional advantage is that when inserting a battery pack the semi-opened position may render insertion of the battery pack simplified since the second automatically opened locking mechanism is not in the way of the battery pack. Moreover, the second locking mechanisms may secure the battery pack automatically as soon as the battery pack is installed in the compartment. Accordingly, the locking mechanism needs only be operated and tightened at one of the two openings.

Furthermore, the industrial vehicle is preferably an industrial truck.

According to a second aspect of the present invention, there is provided a method for replacing a battery pack of an industrial vehicle by means of the battery locking system according to any of the preceding claims, comprising the steps of:
opening the locking mechanism;
removing the battery from the compartment via an opening;
inserting the battery pack to the compartment via the opening; and locking the locking mechanism to block the battery pack.

With only a few execution steps the battery pack may be removed and another or the same battery pack installed to the compartment and blocked. By replaced may mean that the battery pack is exchanged to another battery pack or the battery pack is reinstalled again after for example service or recharging.

Furthermore, the method may comprise the step of, prior to the step of locking the locking mechanism, further comprising the step of:
retracting a load-carrying part of the industrial vehicle beyond a neutral position toward the battery pack to abut the battery pack against the supportive wall arranged opposite the locking mechanism. This results in that play is avoided due to a gap between the supportive wall and the battery pack. The load-carrying part may e.g. be the forks or the mast of an industrial truck.

These and other aspects of the invention will be apparent from and elucidated with reference to the embodiments described hereinafter.

### Brief description of the drawings

In the following, embodiments of the present invention will for exemplifying purposes be described in detail, with reference to the accompanying drawings on which:
Figure 1 a is a perspective view of an example of a battery locking system of the present invention, in a locked state.
Figure 1b is a perspective view of the exemplary battery locking system of the present invention, in an unlocked state.
Figure 2 is an exploded view of a locking mechanism.

### Detailed description of preferred embodiments

In the following examples the present invention will be described in relation to a battery locking system 100 arranged on an industrial truck 150. However, the battery locking system may also be used on other types of battery operated industrial vehicles.

The depicted battery locking system 100 comprises two openings 101 a-b and two corresponding locking mechanisms 110a-b. It is however also possible to use only one opening and accordingly only one locking mechanism. Further, it may also be possible to arrange a different, more simple locking mechanism at one of the openings, even if two openings are employed.

The illustrated system further comprises a compartment 102 formed by a first supporting wall 103 and a second supporting wall 104. The walls are oppositely arranged and the first wall 103 is here integrated with the truck and adapted to support the entire back wall of the battery pack 105. The second supporting wall 104, however, is here formed as a rim or flange merely supporting the lower part of the front wall of the battery pack 105. The two openings 101 a-b are formed between the two supporting walls, so as to be able to insert or remove the battery pack 105 in both lateral directions.

As discussed above, the supporting wall 104 is not necessary for forming the compartment, and is hence optional.

Both ends of the flange 104 are slightly angled outwardly from the compartment 102, in order to facilitate insertion of a battery pack. Further, both ends of the flange ends with a fixed holder, here a socket 111, and a locking mechanism 110a-b, oppositely arranged on the flange, and mirrored in relation to each other. Thus, the fixed holders / sockets 111 are arranged at the ends the flange 104, and are, thus, arranged in vicinity and at one side of the corresponding opening 101 a-b of the compartment 102.

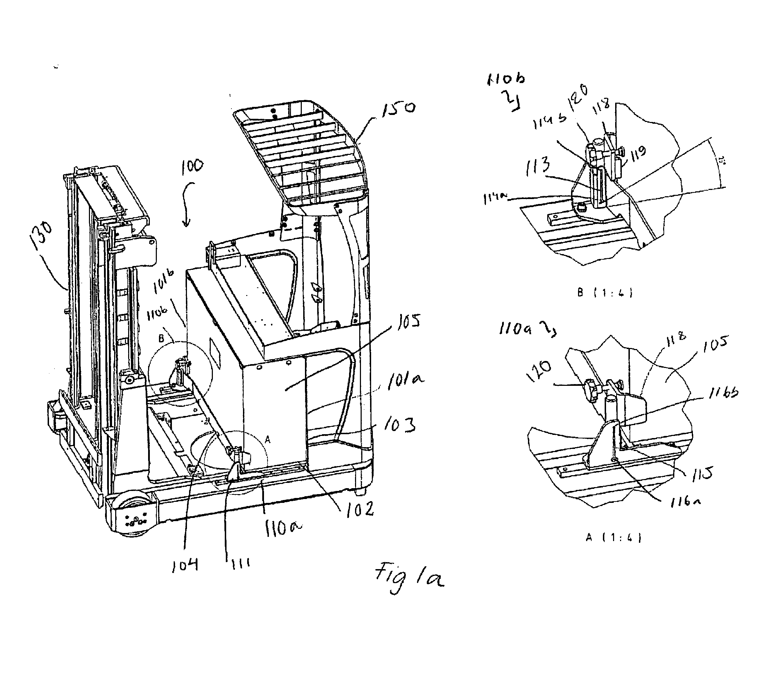

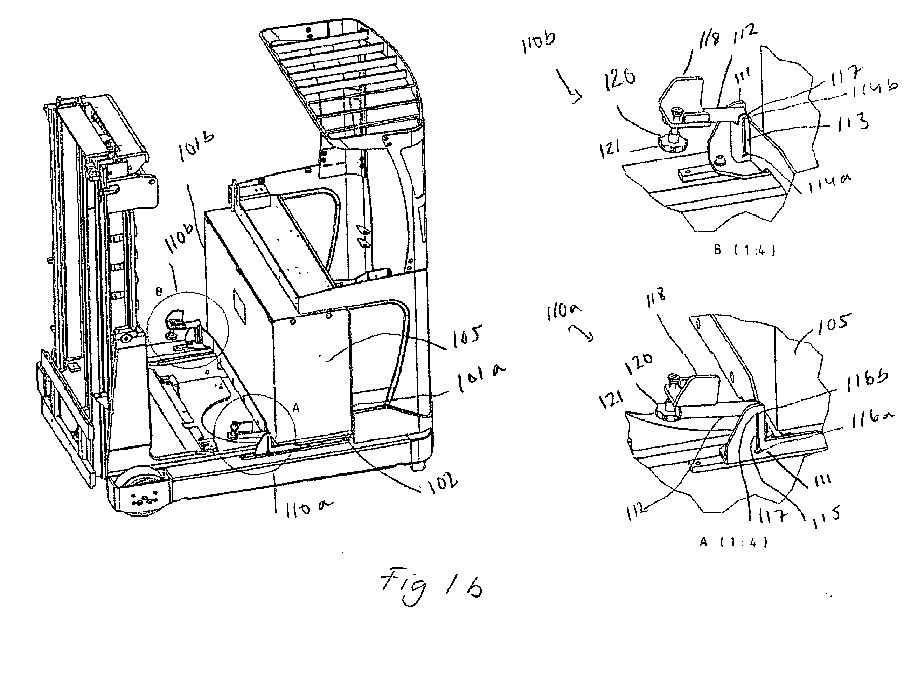

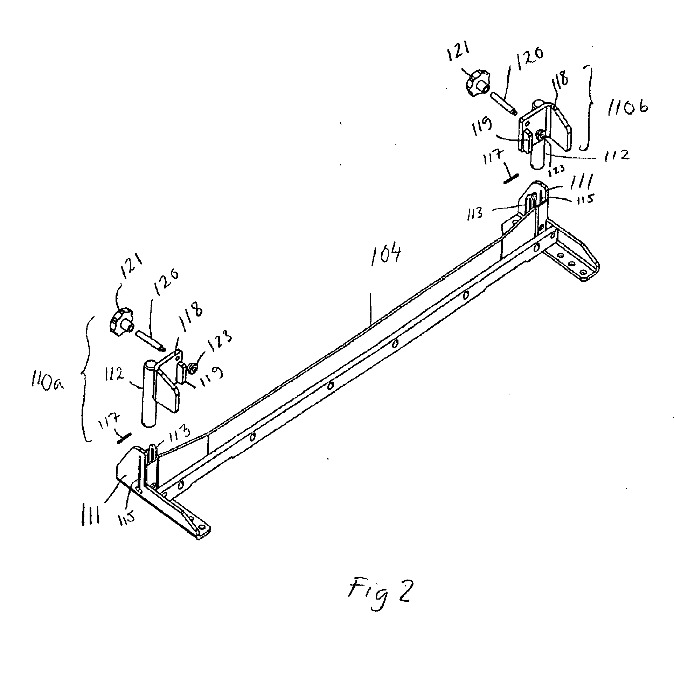

The locking mechanism 110a-b is described in relation to fig. 1 and 2 simultaneously, wherein fig. 2 is an exploded view of the locking mechanisms 110a-b, the socket 111, and the flange 104. The locking mechanism comprises a stub shaft 112, here arranged in the socket 111. In the illustrated example, the socket 111 comprises an inwardly directed guide channel 113 and an outwardly directed guide channel 115, both being closed in a minimum and a maximum position, 114a-b, 116a-b corresponding to an inserted position and an extended position of the stub shaft 112 in relation to the socket 111. Both channels 113, 115 are widened at the minimum position 114a, 116a. However, the widened part of at least one of the channels, here the inwardly directed guide channel 113, forms an inclined channel, inclining with an upward angle of about 25° toward the flange 104. Further, a protrusion, here a pin, 117 is arranged at the lower end of the stub shaft 112 extending through the stub shaft, to be able to run in both of the guide channels 113, 115 simultaneously. In the inserted position of the stub shaft 112, the pin 117 is located in the widened parts of the guide channels 113, 115.

At the upper part of the stub shaft 112 the shaft is provided with an angled plate 118 having an angled locking surface with a shape adapted to surround the corner of the compartment 102 to be able to lock the battery pack 105 in two directions, i.e. the direction of the opening 101a-b and the direction of the flange 104, here above the flange 104. Alternatively, if the second supporting wall 104 is higher, openings may be made in the wall 104 for the locking mechanisms 110a-b to be operable.

A block means 119 is moreover arranged on the angled plate 118 between the angled plate 118 and the front side of the battery pack 105 to be able to compensate for the outwardly directed angle of the flange 104, and securely block the battery pack 105. The shoulder or block means 119 ensures that the battery pack cannot escape through the opening when the locking mechanism is in the inserted position, regardless of whether the locking mechanism has been properly locked and tightened or not.

A lock tightening means 120 is here arranged on the part of the angled plate 118 that is adapted to lock the front wall of the battery pack 105. In the illustrated example, the lock tightening means 120 is a bolt arrangement adapted to tighten or release the angled plate 118 by rotation. In the exploded view of fig. 2 it may moreover be seen that the operating means 119 here comprises a rotatable knob 121 for rotating the operating means 120. Also, there is illustrated a plate formed end surface arranged to abut the battery pack. The end surface may e.g. be provided with a rubber pad 123 or the like, that is adapted to be in contact with the front side with the battery pack 105 without damaging the battery pack 105. There are however a plurality of alternative embodiments of an operating means that are feasible for achieveing the same result including tightening and releasing of the angled locking surface of the angled plate 118 to the battery pack 105. For example, it may comprise a rotatable part with an excentrical cam surface, a displacealbe wedge or the like.

In fig. 1a-b the battery locking system 100 is illustrated in the locked state in fig 1a, and in the unlocked state in fig. 1b.

The procedure for replacing a battery pack, either with a new battery pack, or with the same battery pack after e.g. service or charging, will now be discussed in more detail.

In fig. 1a, the battery pack 105 is illustrated in a secured and locked position. For releasing the battery pack, the lock tightening means 120 on one of the locking mechanisms is loosened, and the locking mechanism 110 a-b is displaced upwardly to the extended position, and tilted away from the opening.

In fig. 1b, both locking mechanisms 110a-b has been manipulated to unblock the battery pack 105 allowing it to be removed from the compartment 102 through any of the openings 101 a-b. However, it is enough to unblock the battery pack 105 by means of only one of the locking mechanisms 110a-b and still be able to remove the battery pack 105.

In fig. 1b, the operating means 120 has been manipulated to release the angled plate 118 from the battery pack 105, here by means of rotating the rotatable knob 121. Further, the stub shaft 112 has been displaced to the extended position out from the socket 111, and further tilted in a direction from the battery pack 105 guided by the pin 117 running in the guide channels 113, 115 until the maximum position 114b, 116b, by means of for example pulling the operating means 120. In the extended position, and due to the outward angle of the flange 104 the battery pack may easily be removed from the compartment 102 and preferably rolled onto a wagon of the same height as the floor of the compartment 102.

In case the other locking mechanism, on the other side, is not manipulated, it will automatically be rotated to a partly opened state during unlocking of the other locking mechanism, and removal of the battery pack. When the first locking mechanism 110a is unlocked, and the battery pack 105 is removed from the compartment via the opening 101 a of the first locking mechanism, the stub shaft 112b of the second locking mechanism 110b automatically rotates due to gravitation until the pin 117 has reached the lower end of the tilted channel at the minimum position 114a of the first guide channel 113. The rotation starts as soon as there is no sufficient force acting between the second locking mechanism 110b and the battery pack 105, which occurs when the first locking mechanism 110a no longer blocks the battery pack 105. By the rotation of the second locking mechanism 110b the angled plate 118 rotates accordingly as soon as the battery pack 105 is moved.

A new battery pack may then be inserted through the same opening as from which the old battery pack was removed.

When inserting a battery pack 105 to a compartment with an automatically partly opened locking mechanism 110b, this locking mechanism 110b returns to the locked state securing the battery pack 105 from escaping through the second opening 101 b, as soon as the battery pack 105 is installed to the compartment 102. Thereafter, the first locking mechanism is locked to block the battery pack 105 from escaping through the first opening 101 a.

In fig. 1 a the battery pack 105, here having a bottom surface on rolls, has been rolled in through one of the openings 101 a-b. The battery pack 105 may for example have been rolled to the opening on a trolley with a height that allows that the battery pack to be easily rolled further into the compartment 102 via one of the openings 101a-b. When on place in the compartment 102 the locking mechanism may be operated to secure the battery pack 105. However, it may be advantageous to, on an industrial truck 150 as in the present example, retract the reach 130 toward the installed battery pack 105, and even beyond a neutral, zero position of the reach 130, to press the battery pack 105 to abut against the first supportive wall 103 of the compartment 102. This is to make sure that there is no space between the first supportive wall 103 and the battery pack 105.

When the battery pack has been inserted into place, the locking mechanism(s) which is tilted open is tilted back, and axially displaced down to its inserted position, and the lock tightening means is operated to tighten the lock and to secure the battery pack in place.

When securing the battery pack 105 by means of each of the locking mechanisms 110a-b, the stub shaft 112 is displaced to the inserted position in the socket 111 guided by the pin 117, moving to the minimum position 114a, 116a of both guide channels 113, 115, by means of manipulating the stub shaft, for example by pushing the operating means 120. Thereafter, the angled locking surface of the angled plate 118 is tightened to the front side of the battery pack 105, by rotating the rotatable knob 121 of the lock tightening means 120. The widened part at the minimum position 116a of the second channel 115 leaves space for some rotation when tightening the angled plate 118 to the battery pack 105, so that it ends up in an optimal position for blocking the battery pack 105.

The person skilled in the art realizes that the present invention is not limited to the preferred embodiments. For example the socket may be displaceable instead of the stub shaft, and the channels may be arranged in the stub shaft instead of the socket, whereby the protrusion may be arranged in the socket instead of the stub shaft. Further, the supportive wall may be higher, but provided with an opening to fit the locking mechanisms. Moreover, the battery locking system may be provided with only one locking mechanism. It may moreover be possible that the channel arranged in the socket is not closed, whereby the stub shaft may be removed from the battery locking system when unlocking the battery pack.

Such and other obvious modifications must be considered to be within the scope of the present invention, as it is defined by the appended claims. It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements. Further, a single unit may perform the functions of several means recited in the claims.

## Claims

1. An industrial vehicle comprising a battery locking system, which comprises:
a compartment for receiving a battery pack comprising at least one supporting wall and at least one opening in said compartment for installation or removal of said battery;
a fixed holder arranged in vicinity of said at least one opening; and
a locking mechanism comprising, in an upper part, an angled locking surface, facing the compartment, adapted to block said battery pack in two directions, and, in a lower part, adapted to be connected to said fixed holder, said locking mechanism being axially displaceable in relation to said fixed holder, and, in an inserted position, being at least partly rotatable;
one of said fixed holder and said locking mechanism comprising a socket and the other comprising a corresponding stub shaft to be inserted to said socket,
wherein a first guide channel is arranged in one of said socket and said stub shaft; **characterized in that**
a first protrusion is arranged on the other of said stub shaft and said socket, said protrusion being adapted to cooperate with said first guide channel so as to guide the axial displacement between the socket and the stub shaft between the inserted position and an extended position of said stub shaft in relation to said socket.

2. The battery locking system according to claim 1, wherein said guide channel is closed, allowing axial displacement of said fixed holder in relation to said locking mechanism only between the inserted and the extended position.

3. The battery locking system according to claim 2, wherein said channel is widened at a position corresponding to the inserted position.

4. The battery locking system according to claim 3, wherein said widened area is inclined so as to allow rotation due to gravitation of said locking mechanism in said fixed holder in the inserted position.

5. The battery locking system according to claim 4, wherein said widened area is inclined with an angle in the range between 10 and 50 degrees, and preferably in the range 15-35 degrees, and most preferably in the range 20-30 degrees.

6. The battery locking system according to any of the preceding claims wherein said locking mechanism is tiltable away from the opening in the extended position.

7. The battery locking system according to any of the preceding claims wherein the fixed holder comprises the socket and the locking mechanism comprises the stub shaft.

8. The battery locking system according to claim 7, wherein said guide channel is arranged in said socket.

9. The battery locking system according to any of the preceding claims further comprising a second guide channel arranged opposite said first guide channel in one of said socket and said stub shaft, and
a second protrusion arranged opposite said first protrusion in the other of said socket and said stub shaft.

10. The battery locking system according to any of the preceding claims comprising a lock tightening means arranged to operate said angled locking surface to block or unblock said battery pack.

11. The battery locking system according to any of the preceding claims, wherein said angled locking surface comprises an inwardly extending shoulder.

12. The industrial vehicle comprising a battery locking system according to any of the preceding claims, which industrial vehicle comprises two oppositely arranged openings, wherein a fixed holder and locking mechanism is arranged in the vicinity of each of said oppositely arranged openings.

13. The industrial vehicle comprising a battery locking system according to any of the preceding claims, wherein the industrial vehicle is an industrial truck.

14. A method for replacing a battery pack of an industrial vehicle by means of the battery locking system according to any of the preceding claims, comprising the steps of:
opening the locking mechanism;
removing the battery from the compartment via an opening;
inserting the battery pack to said compartment via the opening;
locking the locking mechanism to block the battery pack.

15. The method according to claim 14, prior to the step of locking the battery pack, further comprising the step of:
retracting a load carrying part of the industrial vehicle beyond a neutral position toward said battery pack to abut said battery pack against the supportive wall arranged opposite the locking mechanism.

## Patentansprüche

1. Industriefahrzeug mit einem Batterieverriegelungssystem, das Folgendes umfasst:
ein Fach zur Aufnahme eines Batteriesatzes, das zumindest eine Stützwand und zumindest eine Öffnung in dem Fach zum Einbau oder zur Entfernung der Batterie umfasst;
einen festen Halter, der in der Nähe der zumindest einen Öffnung angeordnet ist; und
einen Verriegelungsmechanismus, der in einem oberen Teil eine abgewinkelte Verriegelungsfläche umfasst, die zu dem Fach gerichtet ist und dazu geeignet ist, den Batteriesatz in zwei Richtungen zu blockieren, und in einem unteren Teil zur Verbindung mit dem festen Halter geeignet ist, wobei der Verriegelungsmechanismus in Bezug auf den festen Halter axial verschiebbar ist und in einer eingesetzten Stellung zumindest teilweise drehbar ist;
wobei eines aus dem festen Halter und dem Verriegelungsmechanismus eine Fassung und das andere einen entsprechenden Wellenstumpf zum Einsatz in die Fassung umfass;
wobei in einem aus der Fassung und dem Wellenstumpf ein erster Führungskanal eingerichtet ist; **dadurch gekennzeichnet, dass**
an dem anderen aus dem Wellenstumpf und der Fassung ein erster Vorsprung eingerichtet ist, wobei der Vorsprung dazu geeignet ist, so mit dem ersten Führungskanal zusammenzuwirken, dass die axiale Verschiebung zwischen der Fassung und dem Wellenstumpf zwischen der eingesetzten Stellung und einer ausgefahrenen Stellung des Wellenstumpfs in Bezug auf die Fassung geführt wird.

2. Batterieverriegelungssystem nach Anspruch 1, wobei der Führungskanal geschlossen ist, wodurch die axiale Verschiebung des festen Halters in Bezug auf den Verriegelungsmechanismus nur zwischen der eingesetzten und der ausgefahrenen Stellung gestattet wird.

3. Batterieverriegelungssystem nach Anspruch 2, wobei der Kanal an einer Position, die der eingesetzten Stellung entspricht, verbreitert ist.

4. Batterieverriegelungssystem nach Anspruch 3, wobei der verbreiterte Bereich so geneigt ist, dass er in der eingesetzten Stellung eine Drehung des Verriegelungsmechanismus aufgrund der Schwerkraft in dem festen Halter erlaubt.

5. Batterieverriegelungssystem nach Anspruch 4, wobei der verbreiterte Bereich in einem Winkel im Bereich von 10 bis 50 Grad und vorzugsweise im Bereich von 15 bis 35 Grad und insbesondere im Bereich von 20 bis 30 Grad geneigt ist.

6. Batterieverriegelungssystem nach einem der vorhergehenden Ansprüche, wobei der Verriegelungsmechanismus in der ausgefahrenen Stellung von der Öffnung weg kippbar ist.

7. Batterieverriegelungssystem nach einem der vorhergehenden Ansprüche, wobei der feste Halter die Fassung umfasst, und der Verriegelungsmechanismus den Wellenstumpf umfasst.

8. Batterieverriegelungssystem nach Anspruch 7, wobei der Führungskanal in der Fassung eingerichtet ist.

9. Batterieverriegelungssystem nach einem der vorhergehenden Ansprüche, ferner umfassend einen zweiten Führungskanal, der dem ersten Führungskanal gegenüberliegend in einem aus der Fassung und dem Wellenstumpf eingerichtet ist, und
einen zweiten Vorsprung, der dem ersten Vorsprung gegenüberliegend in dem anderen aus der Fassung und dem Wellenstumpf eingerichtet ist.

10. Batterieverriegelungssystem nach einem der vorhergehenden Ansprüche, umfassend ein Verriegelungsanzugsmittel, das dazu eingerichet ist, die abgewinkelte Verriegelungsfläche so zu betätigen, dass der Batteriesatz blockiert oder freigegeben wird.

11. Batterieverriegelungssystem nach einem der vorhergehenden Ansprüche, wobei die abgewinkelte Verriegelungsfläche eine sich einwärts erstreckende Schulter aufweist.

12. Industriefahrzeug, umfassend ein Batterieverriegelungssystem nach einem der vorhergehenden Ansprüche, wobei das Industriefahrzeug zwei gegenüberliegend angeordnete Öffnungen umfasst, wobei in der Nähe einer jeden der beiden entgegengesetzt angeordneten Öffnungen ein fester Halter und ein Verriegelungsmechanismus angeordnet sind.

13. Industriefahrzeug, umfassend ein Batterieverriegelungssystem nach einem der vorhergehenden Ansprüche, wobei das Industriefahrzeug ein Flurförderzeug ist.

14. Verfahren zum Austauschen eines Batteriesatzes eines Industriefahrzeugs durch das Batterieverriegelungssystem nach einem der vorhergehenden Ansprüche, umfassend die folgenden Schritte:
Öffnen des Verriegelungsmechanismus;
Entnehmen der Batterie über eine Öffnung aus dem Fach;
Einsetzen des Batteriesatzes über die Öffnung in das Fach;
Verriegeln des Verriegelungmechanismus, um den Batteriesatz zu blockieren.

15. Verfahren nach Anspruch 15, das vor dem Schritt des Verriegelns des Batteriesatzes ferner den folgenden Schritt umfasst:
Zurückziehen eines lasttragenden Teils des Industriefahrzeugs über eine neutrale Stellung hinaus zu dem Batteriesatz, um den Batteriesatz an die Stützwand, die dem Verriegelungsmechanismus gegenüberliegend eingerichtet ist, anzulegen.

## Revendications

1. Véhicule industriel comprenant un système de verrouillage de batterie, qui comprend:
un compartiment pour recevoir un bloc de batterie comprenant au moins une paroi de support et au moins une ouverture dans ledit compartiment à des fins d'installation ou retrait de ladite batterie;
un support fixe agencé à proximité de ladite au moins une ouverture; et
un mécanisme de verrouillage comprenant, dans une partie supérieure, une surface de verrouillage formant un angle, faisant face au compartiment, adaptée afin de bloquer ledit bloc de batterie dans deux directions, et, dans une partie inférieure, adapté afin d'être raccordée audit support fixe, ledit mécanisme de verrouillage étant déplaçable axialement par rapport audit support fixe et, dans une position insérée, étant au moins partiellement rotatif;
un dudit support fixe et dudit mécanisme de verrouillage comprenant une douille et l'autre comprenant un bout d'arbre correspondant à insérer dans ladite douille,
dans lequel un premier canal de guidage est agencé dans un de ladite douille et ledit bout d'arbre; **caractérisé en ce que**
une première protubérance est agencée sur l'autre dudit bout d'arbre et ladite douille, ladite protubérance étant adaptée afin de coopérer avec ledit premier canal de guidage de manière à guider le déplacement axial entre la douille et le bout d'arbre entre la position insérée et une position étendue dudit bout d'arbre par rapport à ladite douille.

2. Système de verrouillage de batterie selon la revendication 1, dans lequel ledit canal de guidage est fermé, ce qui permet un déplacement axial dudit support fixe par rapport audit mécanisme de verrouillage seulement entre la position insérée et la position étendue.

3. Système de verrouillage de batterie selon la revendication 2, dans lequel ledit canal est élargi à une position correspondant à la position insérée.

4. Système de verrouillage de batterie selon la revendication 3, dans lequel ladite zone élargie est inclinée de manière à permettre une rotation due à la gravitation dudit mécanisme de verrouillage dans ledit support fixe dans la position insérée.

5. Système de verrouillage de batterie selon la revendication 4, dans lequel ladite zone élargie est inclinée à un angle dans la plage comprise entre 10 et 50 degrés, et de préférence dans la plage de 15 à 35 degrés, et de manière encore préférée dans la plage de 20 à 30 degrés.

6. Système de verrouillage de batterie selon une quelconque des revendications précédentes, dans lequel ledit mécanisme de verrouillage est inclinable à distance de l'ouverture dans la position étendue.

7. Système de verrouillage de batterie selon une quelconque des revendications précédentes, dans lequel le support fixe comprend la douille et le mécanisme de verrouillage comprend le bout d'arbre.

8. Système de verrouillage de batterie selon la revendication 7, dans lequel ledit canal de guidage est agencé dans ladite prise.

9. Système de verrouillage de batterie selon une quelconque des revendications précédentes, comprenant en outre un second canal de guidage agencé à l'opposé dudit premier canal de guidage dans un de ladite prise et ledit bout d'arbre, et
une seconde protubérance agencée à l'opposé de ladite première protubérance dans l'autre de ladite prise et ledit bout d'arbre.

10. Système de verrouillage de batterie selon une quelconque des revendications précédentes comprenant un moyen de serrage de verrou agencé afin d'amener ladite surface de verrouillage formant un angle à verrouiller ou déverrouiller ledit bloc de batterie.

11. Système de verrouillage de batterie selon une quelconque des revendications précédentes, dans lequel ladite surface de verrouillage formant en angle comprend un épaulement s'étendant vers l'intérieur.

12. Véhicule industriel comprenant un système de verrouillage de batterie selon une quelconque des revendications précédentes, lequel véhicule industriel comprend deux ouvertures disposées à l'opposé, dans lequel un support fixe et un mécanisme de verrouillage est agencé à proximité de chacune desdites ouvertures disposées à l'opposé.

13. Véhicule industriel comprend un système de verrouillage de batterie selon une quelconque des revendications précédentes, dans lequel le véhicule industriel est un camion industriel.

14. Procédé de remplacement d'un bloc de batterie d'un véhicule industriel au moyen du système de verrouillage de batterie selon une quelconque des revendications précédentes, comprenant les étapes consistant à:
ouvrir le mécanisme de verrouillage;
retirer la batterie du compartiment via une ouverture;
insérer le bloc de batterie dans ledit compartiment via l'ouverture;
verrouiller le mécanisme de verrouillage afin de bloquer le bloc de batterie.

15. Procédé selon la revendication 14, avant l'étape de verrouillage du bloc de batterie, comprenant en outre l'étape consistant à:
rétracter une partie porteuse de charge du véhicule industriel au-delà d'une position neutre vers ledit bloc de batterie afin de faire buter ledit bloc de batterie contre la paroi de support agencée à l'opposé du mécanisme de verrouillage.
